# EUROPÄISCHE PATENTSCHRIFT

(11) **EP 3 824 250 B1**
(45) Veröffentlichungstag und Bekanntmachung des Hinweises auf die Patenterteilung: **28.08.2024**
(21) Anmeldenummer: 19739586.6
(22) Anmeldetag: 11.07.2019
(51) Int. Cl.: G01D 5/14

(54) **DREHWINKELMESSSYSTEM**
ROTATIONAL ANGLE MEASURING SYSTEM
SYSTÈME DE MESURE D'ANGLE DE ROTATION

(30) Priorität: 20.07.2018 DE 102018117600
(43) Veröffentlichungstag der Anmeldung: 26.05.2021
(73) Patentinhaber: Fraba B.V., 6416 SG Heerlen (NL)
(72) Erfinder: HALLERMANN, Florian, 52068 Aachen (DE); VOLKER, Hanno, 52064 Aachen (DE)
(74) Vertreter: terpatent PartGmbB
(86) Internationale Anmeldenummer: PCT/EP2019/068690
(87) Internationale Veröffentlichungsnummer: WO 2020/016098

(56) Entgegenhaltungen:
- EP-A2- 2 159 547
- DE-A1- 102009 019 719
- DE-A1- 102009 051 978

## Beschreibung

Die Erfindung betrifft ein Drehwinkelmesssystem zur Erfassung einer Drehbewegung einer Welle, mit einer mit der Welle drehfest verbundenen und die Welle radial umschließenden Rotoreinheit, die mindestens einen Sensormagnet aufweist, einer feststehenden Statoreinheit mit einer Statorplatine, und einer Multiturn-Sensoreinheit, die radial beabstandet zur Welle auf der Statorplatine angeordnet ist und zur Erfassung von Wellenumdrehungen funktional mit dem Sensormagnet zusammenwirkt, mit einem Wiegand-Sensor, mindestens einem Hall-Sensor und einer Auswerteeinheit, die elektrisch mit dem Wiegand-Sensor und dem Hall-Sensor verbunden ist.

Derartige Drehwinkelmesssysteme dienen zur Messung von Drehbewegungen einer Welle und werden vielfach auch als Winkelmesseinrichtung, Drehwinkelsensor oder Drehgeber bezeichnet. Solche Systeme werden insbesondere zur Steuerung und Überwachung von Elektromotoren, insbesondere Servomotoren, in Maschinen, Anlagen oder Fahrzeugen eingesetzt. Eine besondere Rolle spielen dabei kontaktfreie Drehwinkelmesssysteme, beispielsweise optische oder magnetisch-erregte Systeme, da diese aufgrund der verschleißfreien Sensorik eine lange Lebensdauer haben.

Aus der DE 10 2009 019 719 A1 ist beispielsweise ein Magnet-basiertes Drehwinkelmesssystem zur Erfassung der Drehbewegung einer Welle bekannt. Bei Magnet-basierten Drehwinkelmesssystemen wird die Umdrehung der Welle mittels des Messsystems rein magnetisch oder magnetisch-optisch erfasst. Das Messsystem umfasst eine rotierende Rotoreinheit, auf der mehrere Sensormagnete angeordnet sind, und eine feststehende Statoreinheit, auf der radial beabstandet zu der Welle eine Multiturn-Sensoreinheit angeordnet ist, mit einem Wiegand-Sensor, einem Hall-Sensor und einer Auswerteeinheit. Die Rotoreinheit ist drehfest mit der Welle verbunden, sodass bei einer Drehung der Welle die Sensormagnete an der feststehenden Multiturn-Sensoreinheit vorbeibewegt werden, wobei das Magnetfeld der Sensormagnete von dem Wiegand-Sensor und dem Hall-Sensor der Multiturn-Sensoreinheit erfasst wird.

Aus der DE 10 2009 051 978 A1 ist ein Drehwinkelmesssystem bekannt, bei dem die Rotoreinheit an einem axialen Ende der Welle angeordnet ist und die Multiturn-Sensoreinheit axial beabstandet zu der Welle auf einer Statorplatine der Statoreinheit angeordnet ist.

Aus der EP 2 159 547 A2 ist ein Drehwinkelmesssystem bekannt, bei dem die Rotoreinheit an einem axialen Ende einer zusätzlichen Sensorwelle angeordnet ist, die radial benachbart zu der zu überwachenden Welle angeordnet und über ein Zahnradgetriebe mit dieser gekoppelt ist, und die Multiturn-Sensoreinheit axial beabstandet zu der Sensorwelle auf einer Statorplatine der Statoreinheit angeordnet ist.

Abhängig vom Anwendungsbereich kann die von dem Drehwinkelmesssystem erfasste Welle unterschiedlich ausgebildet sein und kann insbesondere auch unterschiedliche Außendurchmesser aufweisen. Um eine zuverlässige Erfassung der Drehbewegung der Welle zu ermöglich, muss das Drehwinkelmesssystem an die spezielle Wellengeometrie angepasst werden. Hierbei ist vor allem eine exakte Ausrichtung zwischen dem Sensormagnet der Rotoreinheit und dem Wiegand-Sensor sowie dem Hall-Sensor der Multiturn-Sensoreinheit entscheidend, sodass bei einer Drehung der Welle das Magnetfeld des Sensormagneten zuverlässig von der Multiturn-Sensoreinheit erfassbar ist.

Es stellt sich daher die Aufgabe, ein Drehwinkelmesssystem zur Erfassung der Drehbewegung einer Welle zu schaffen, das auf einfache Weise an unterschiedliche Wellengeometrien anpassbar ist.

Diese Aufgabe wird durch ein Drehwinkelmesssystem zur Erfassung der Drehbewegung einer Welle mit den Merkmalen des Hauptanspruchs 1 gelöst.

Erfindungsgemäß weist die Multiturn-Sensoreinheit eine separate Sensoreinheit-Platine auf, die an der Statorplatine der Statoreinheit befestigt ist und auf der der Wiegand-Sensor, der mindestens eine Hall-Sensor und die Auswerteeinheit angeordnet sind. Die Multiturn-Sensoreinheit ist somit als eigenständiges Modul ausgebildet, das auf einfache Weise unterschiedlich auf der Statorplatine positioniert und ausgerichtet werden kann, um abhängig von der Wellengeometrie eine zuverlässige Erfassung des Magnetfelds des Sensormagneten und somit eine zuverlässige Erfassung der Drehbewegung der Welle sicherzustellen. Das erfindungsgemäße Drehwinkelmesssystem ist folglich auf einfache Weise an verschiedene Wellengeometrien anpassbar.

Erfindungsgemäß ist der Wiegand-Sensor auf einer ersten axialen Seite der Sensoreinheit-Platine angeordnet und ist der Hall-Sensor auf einer der ersten axialen Seite gegenüberliegenden zweiten axialen Seite der Sensoreinheit-Platine angeordnet. Hierbei ist der Hall-Sensor im Allgemeinen auf der der Rotoreinheit zugewandten axialen Seite der der Sensoreinheit-Platine angeordnet, sodass der Sensormagnet in einem sehr kleinen axialen Abstand an dem Hall-Sensor vorbeigeführt wird. Das Sensormagnetfeld weist somit an der Position des Hall-Sensors eine große axiale Magnetfeld-Komponente auf, sodass das Sensormagnetfeld zuverlässig von dem Hall-Sensor erfassbar ist. Der Wiegand-Sensor ist im Allgemeinen auf der von der Rotoreinheit abgewandten axialen Seite der Sensoreinheit-Platine angeordnet und somit in einem größeren Abstand zu dem Sensormagneten angeordnet. Das Sensormagnetfeld weist somit an der Position des Wiegand-Sensors eine große transversale Magnetfeld-Komponente auf, sodass das Sensormagnetfeld zuverlässig von dem Wiegand-Draht des Wiegand-Sensor erfassbar ist, der sich im Allgemeinen radial zur Welle und somit in einer Transversalebene erstreckt. Durch die Anordnung des Wiegand-Sensors und des Hall-Sensors auf gegenüberliegenden axialen Seiten der Sensoreinheit-Platine ist somit eine zuverlässige und exakte Erfassung der Drehbewegung der Welle sichergestellt.

Vorzugsweise sind der Wiegand-Sensor und der Hall-Sensor lateral, also in Umfangsrichtung der Welle, beabstandet zueinander auf der Sensoreinheit-Platine angeordnet. In Abhängigkeit von der Drehrichtung der Welle befindet sich ein Sensormagnet folglich zu dem Zeitpunkt, an dem sein Magnetfeld von dem Wiegand-Sensor erfasst wird, entweder auf der dem Hall-Sensor zugewandten lateralen Seite des Wiegand-Sensors oder auf der von dem Hall-Sensor abgewandten lateralen Seite des Wiegand-Sensors, und somit in einem unterschiedlichen Abstand zu dem Hall-Sensor. Hieraus ergeben sich je nach Drehrichtung unterschiedliche Hall-Sensor-Messwerte für diesen Zeitpunkt, sodass durch Auswertung des Hall-Sensor-Messwertes für diesen Zeitpunkt die Drehrichtung der Welle auf einfache Weise bestimmbar ist.

Vorteilhafterweise weist die Multiturn-Sensoreinheit einen integrierten Schaltkreis auf, durch den die Auswerteeinheit und der Hall-Sensor gebildet sind. Derartige integrierte Schaltkreise sind kommerziell verfügbar und können auf einfache Weise auf der Sensoreinheit-Platine angeordnet werden. Dies ermöglicht ein kostengünstiges und zuverlässiges Drehwinkelmesssystem.

In einer besonders vorteilhaften Ausführung der Erfindung ist der integrierte Schaltkreis auf der der Rotoreinheit zugewandten axialen Seite der Sensoreinheit-Platine angeordnet und weist die Statorplatine auf der von der Rotoreinheit abgewandten axialen Seite eine Aussparung auf, in die der integrierte Schaltkreis mit dem Hall-Sensor mindestens teilweise eintaucht. Der axiale Abstand zwischen dem Sensormagnet und dem Hall-Sensor ist folglich sehr klein, sodass das Sensormagnetfeld von dem Hall-Sensor zuverlässig erfassbar ist.

Vorzugsweise weist die Rotoreinheit vier gleichmäßig entlang des Umfangs verteilte Sensormagnete auf. Hierdurch können von dem Wiegand-Sensor bereits halbe Umdrehungen der Welle erfasst werden, wodurch eine zuverlässige Erfassung der Drehbewegung der Welle ermöglicht wird.

In einer bevorzugten Ausführung der Erfindung ist die Welle eine Hohlwelle. Das erfindungsgemäße Drehwinkelmesssystem ist insbesondere auch für die Erfassung der Drehbewegung einer Hohlwelle geeignet, bei der eine konventionelle Anordnung der Sensorik an einem axialen Ende der Welle nicht ohne besondere Vorkehrungen möglich ist.

Vorteilhafterweise ist eine kapazitive Singleturn-Sensoreinheit zur Erfassung von Wellen-Teildrehungen vorgesehen, die ein drehfest mit der Welle verbundenes erstes Singleturn-Sensorelement und ein feststehendes zweites Singleturn-Sensorelement umfasst. Die kapazitive Singleturn-Sensoreinheit ist auf einfache Weise in das Drehwinkelmesssystem integrierbar und ermöglicht eine besonders exakte Erfassung der Wellen-Drehbewegung.

Ein Ausführungsbeispiel eines erfindungsgemäßen Drehwinkelmesssystems wird nachfolgend anhand der beigefügten Figuren beschrieben, wobei
Figur 1 einen Längsschnitt eines erfindungsgemäßen Drehwinkelmesssystems zeigt,

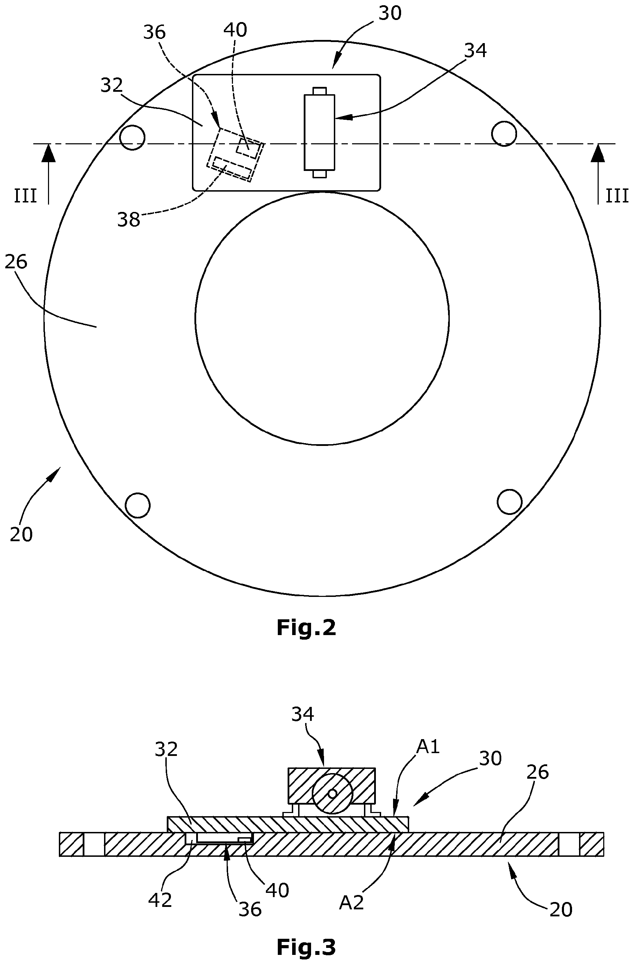

Figur 2 eine Draufsicht auf die axiale Unterseite einer Statorplatine des Drehwinkelmesssystems aus Figur 1 zeigt, auf der eine Multiturn-Sensoreinheit angeordnet ist,
Figur 3 eine Schnittdarstellung der entlang der Linie III-III geschnittenen Statorplatine und Sensoreinheit aus Figur 2 zeigt, und

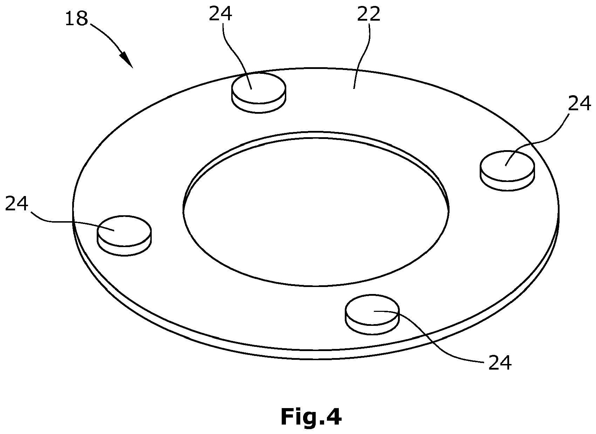

Figur 4 eine perspektivische Darstellung der axialen Oberseite einer Rotoreinheit des Drehwinkelmesssystems aus Figur 1 zeigt.

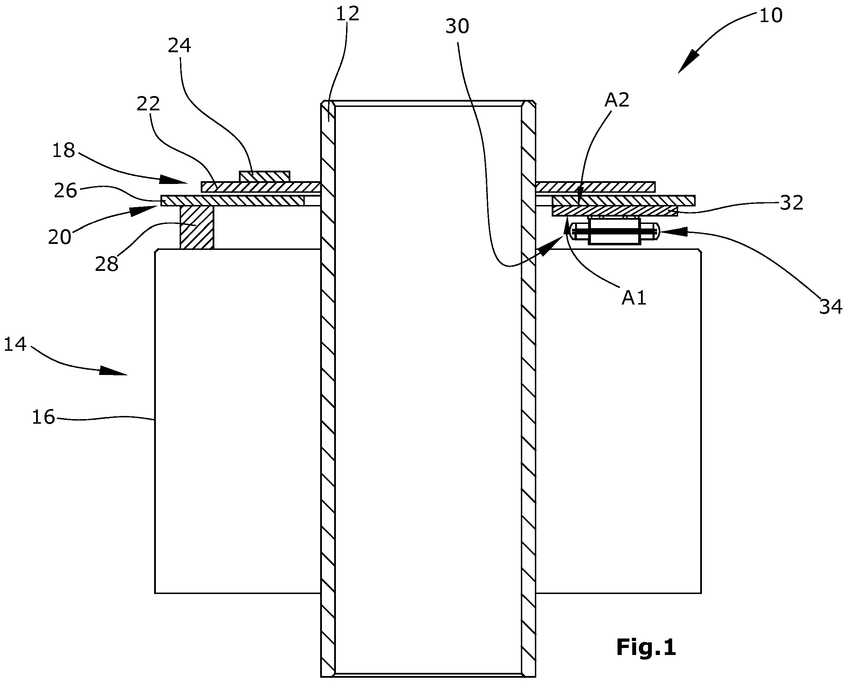

Die Figur 1 zeigt ein Drehwinkelmesssystem 10 zur Erfassung der Drehbewegung einer Welle 12. Die Welle 12 ist im vorliegenden Ausführungsbeispiel eine Hohlwelle, die sich im Wesentlichen in axialer Richtung erstreckt und von einem Antriebsmotor 14 mit einem statischen Motorgehäuse 16 angetrieben wird. Das Drehwinkelmesssystem 10 umfasst eine Rotoreinheit 18 und eine Statoreinheit 20.

Die Rotoreinheit 18 weist eine Rotorplatine 22 auf, die die Welle 12 radial umschließt und direkt an der Welle 12 befestigt ist. Die Rotoreinheit 18 ist somit drehfest mit der Welle 12 verbunden. Auf der axialen Oberseite der Rotorplatine 22 sind vier gleichmäßig entlang ihres Umfangs verteilte Sensormagnete 24 angeordnet. Die Statoreinheit 20 weist eine Statorplatine 26 auf, die die Welle 12 radial umschließt. Die Statorplatine 26 ist über mehrere Stator-Befestigungsmittel 28 feststehend an dem statischen Motorgehäuse 16 befestigt.

Auf der axialen Unterseite der Statorplatine 26 ist radial beabstandet zu der Welle 12 eine Multiturn-Sensoreinheit 30 angeordnet. Die Multiturn-Sensoreinheit 30 weist eine separate Sensoreinheit-Platine 32, auf der ein Wiegand-Sensor 34 und ein integrierter Schaltkreis 36 angeordnet sind. Die Sensoreinheit-Platine 32 ist an der axialen Unterseite der Statorplatine 26 befestigt, beispielsweise über eine Klebeverbindung oder eine Steckverbindung. Der integrierte Schaltkreis 36 umfasst eine Auswerteinheit 38 und einen Hall-Sensor 40, die elektrisch miteinander verbunden sind. Die Auswerteinheit 38 ist ferner elektrisch mit dem Wiegand-Sensor 34 verbunden und ist signaltechnisch mit einem nicht näher gezeigten nicht-flüchtigen Datenspeicher verbunden, in dem ein Umdrehungs-Zählwert von der Auswerteeinheit 38 abgespeichert und ausgelesen wird. Der integrierte Schaltkreis 36 umfasst ferner eine nicht näher dargestellte Steuerlogik und eine nicht näher dargestellte Energieverwaltung, die einen energieautarken Betrieb der Multiturn-Sensoreinheit 30 über die aus dem Wiegand-Sensor 34 gewonnene elektrische Energie ermöglichen. Die grundlegende Funktionsweise der Multiturn-Sensoreinheit 30 kann im Wesentlichen der DE 102 59 223 B3 entnommen werden, auf die in diesem Zusammenhang explizit verwiesen wird.

Der Wiegand-Sensor 34 ist auf einer ersten axialen Seite A1, hier die axiale Unterseite, der Sensoreinheit-Platine 32 angeordnet und an der Sensoreinheit-Platine 32 befestigt. Der integrierte Schaltkreis 36 auf einer der ersten axialen Seite A1 gegenüberliegenden zweiten axialen Seite A2, hier die axiale Oberseite, der Sensoreinheit-Platine 32 angeordnet und an der Sensoreinheit-Platine 32 befestigt. Der integrierte Schaltkreis 36 taucht im Wesentlichen vollständig in eine korrespondierende Statorplatinen-Aussparung 42 ein, die auf der axialen Unterseite der Statorplatine 26 ausgebildet ist. Die Multiturn-Sensoreinheit 34 ist derart positioniert und ausgerichtet, dass bei einer Rotation der Welle 12 die Magnetfelder der Sensormagnete 24, die mit der Welle 12 mitdrehen, sowohl von dem Wiegand-Sensor 34 als auch von dem Hall-Sensor 40 zuverlässig erfassbar sind. Der Wiegand-Sensor 34 und der integrierte Schaltkreis 36 sind lateral beabstandet zueinander auf der Sensoreinheit-Platine 32 angeordnet, sodass der Wiegand-Sensor 34 und der Hall-Sensor 40 in Umfangsrichtung versetzt zueinander positioniert sind. Sobald der Wiegand-Sensor 34 das Magnetfeld eines Sensormagneten 24 erfasst, wird von der Auswerteeinheit 38 ein von dem Hall-Sensor 40 erfasster Hall-Sensor-Messwert ausgewertet. Abhängig von der Drehrichtung der Welle 12 befindet sich der Sensormagnet 24 zu diesem Erfassungszeitpunkt entweder auf der dem Hall-Sensor 40 zugewandten lateralen Seite des Wiegand-Sensors 34 oder auf der von dem Hall-Sensor 40 abgewandten lateralen Seite des Wiegand-Sensors 34, und somit in einem unterschiedlichen Abstand zu dem Hall-Sensor 40. Hieraus ergeben sich je nach Drehrichtung unterschiedliche Hall-Sensor-Messwerte für den Erfassungszeitpunkt, sodass durch Auswertung des Hall-Sensor-Messwertes für den Erfassungszeitpunkt die Drehrichtung der Welle 12 auf einfache Weise bestimmbar ist.

Zur Verbesserung der Winkelauflösung umfasst das Drehwinkelmesssystems 10 eine nicht näher dargestellte kapazitive Singleturn-Sensoreinheit mit einem ersten Singleturn-Sensorelement, das an der axialen Unterseite der Rotoreinheit 18 angeordnet ist und somit drehfest mit der Welle 12 verbunden ist, und mit einem zweiten Sensorelement, das feststehend an der axialen Oberseite der Statoreinheit 20 angeordnet ist. Das Drehwinkelmesssystems 10 weist ferner eine nicht näher dargestellte zentrale Logikeinheit auf, die signaltechnisch mit der Multiturn-Sensoreinheit 34 und der Singleturn-Sensoreinheit verbunden ist, um sowohl die absolute Anzahl der Wellendrehungen, als auch den aktuellen relativen Drehwinkelwinkel der Welle zu bestimmen. Die zentrale Logikeinheit kann beispielsweise durch einen Mikrocontroller oder durch ein sogenanntes "Field Programmable Gate Array" (FPGA) gebildet sein.

### Bezugszeichenliste

- 10: Drehwinkelmesssystem
- 12: Welle
- 14: Antriebsmotor
- 16: Motorgehäuse
- 18: Rotoreinheit
- 20: Statoreinheit
- 22: Rotorplatine
- 24: Sensormagnete
- 26: Statorplatine
- 28: Stator-Befestigungsmittel
- 30: Multiturn-Sensoreinheit
- 32: Sensoreinheit-Platine
- 34: Wiegand-Sensor
- 36: integrierter Schaltkreis
- 38: Auswerteinheit
- 40: Hall-Sensor
- 42: Statorplatinen-Aussparung
- A1: erste axiale Seite
- A2: zweite axiale Seite

## Patentansprüche

1. Drehwinkelmesssystem (10) zur Erfassung einer Drehbewegung einer Welle (12), mit
einer mit der Welle (12) drehfest verbundenen und die Welle (12) radial umschließenden Rotoreinheit (18), die mindestens einen Sensormagnet (24) aufweist,
einer feststehenden Statoreinheit (20) mit einer Statorplatine (26), und
einer Multiturn-Sensoreinheit (30), die radial beabstandet zur Welle (12) auf der Statorplatine (26) angeordnet ist und zur Erfassung von Wellenumdrehungen funktional mit dem Sensormagnet (24) zusammenwirkt, mit
einem Wiegand-Sensor (34),
mindestens einem Hall-Sensor (40) und
einer Auswerteeinheit (38), die elektrisch mit dem Wiegand-Sensor (34) und dem Hall-Sensor (40) verbunden ist,
**dadurch gekennzeichnet, dass**
die Multiturn-Sensoreinheit (30) eine separate Sensoreinheit-Platine (32) aufweist, die an der Statorplatine (26) befestigt ist und auf der der Wiegand-Sensor (34), der mindestens eine Hall-Sensor (40) und die Auswerteeinheit (38) angeordnet sind, wobei der Wiegand-Sensor (34) auf einer ersten axialen Seite (A1) der Sensoreinheit-Platine (32) angeordnet ist und der Hall-Sensor (40) auf einer der ersten axialen Seite (A1) in axialer Richtung
gegenüberliegenden zweiten axialen Seite (A2) der Sensoreinheit-Platine (32) angeordnet ist.

2. Drehwinkelmesssystem (10) nach Anspruch 1, wobei der Wiegand-Sensor (34) und der Hall-Sensor (40) lateral beabstandet zueinander auf der Sensoreinheit-Platine (32) angeordnet sind.

3. Drehwinkelmesssystem (10) nach einem der vorigen Ansprüche, wobei die Multiturn-Sensoreinheit (30) einen integrierten Schaltkreis (36) aufweist, durch den die Auswerteeinheit (38) und der Hall-Sensor (40) gebildet sind.

4. Drehwinkelmesssystem (10) nach Anspruch 3, wobei der integrierte Schaltkreis (36) auf der zweiten axialen Seite (A2) der Sensoreinheit-Platine (32) angeordnet ist und die Statorplatine (26) auf der von der Rotoreinheit (18) abgewandten axialen Seite eine Aussparung (42) aufweist, in die der integrierte Schaltkreis (36) mindestens teilweise eintaucht.

5. Drehwinkelmesssystem (10) nach einem der vorigen Ansprüche, wobei die Rotoreinheit (18) vier gleichmäßig entlang des Umfangs verteilte Sensormagnete (24) aufweist.

6. Drehwinkelmesssystem (10) nach einem der vorigen Ansprüche, wobei die Welle (12) eine Hohlwelle ist.

7. Drehwinkelmesssystem (10) nach einem der vorigen Ansprüche, wobei zusätzlich eine kapazitive Singleturn-Sensoreinheit zur Erfassung von Wellen-Teildrehungen vorhanden ist, die ein drehfest mit der Welle verbundenes erstes Singleturn-Sensorelement und ein feststehendes zweites Singleturn-Sensorelement umfasst.

## Claims

1. Angle of rotation measuring system (10) for detecting a rotational movement of a shaft (12), with
a rotor unit (18) which is connected to the shaft (12) in a rotationally fixed manner, radially surrounds the shaft (12) and comprises at least one sensor magnet (24),
a stationary stator unit (20) with a stator board (26), and
a multiturn sensor unit (30), which is arranged radially spaced from the shaft (12) on the stator plate (26) and interacts functionally with the sensor magnet (24) to detect shaft rotations, with
a Wiegand sensor (34),
at least one Hall sensor (40) and
an evaluation unit (38) which is electrically connected to the Wiegand sensor (34) and to the Hall sensor (40),
**characterized in that**
the multiturn sensor unit (30) comprises a separate sensor unit circuit board (32) which is fastened to the stator circuit board (26) and on which the Wiegand sensor (34), the at least one Hall sensor (40) and the evaluation unit (38) are arranged, wherein the Wiegand sensor unit (34) is arranged on a first axial side (A1) of the sensor unit circuit board (32) and the Hall sensor (40) is arranged on a second axial side (A2) of the sensor unit circuit board (32) which is opposite the first axial side (A1) in axial direction.

2. Angle of rotation measuring system (10) according to claim 1, wherein the Wiegand sensor unit (34) and the Hall sensor (40) are arranged laterally spaced apart from each other on the sensor unit circuit board (32).

3. Angle of rotation measuring system (10) according to one of the preceding claims, wherein the multiturn sensor unit (30) comprises an integrated circuit (36) by which the evaluation unit (38) and the Hall sensor (40) are constituted.

4. Angle of rotation measuring system (10) according to claim 3, wherein the integrated circuit (36) is arranged on the second axial side (A2) of the sensor unit circuit board (32) and the stator circuit board (26) comprises a recess (42) on the axial side facing away from the rotor unit (18), into which recess (42) the integrated circuit (36) is at least partially inserted.

5. Angle of rotation measuring system (10) according to one of the preceding claims, wherein the rotor unit (18) comprises four sensor magnets (24) which are evenly distributed along the circumference.

6. Angle of rotation measuring system (10) according to one of the preceding claims, wherein the shaft (12) is a hollow shaft.

7. Angle of rotation measuring system (10) according to one of the preceding claims, additionally comprising a capacitive singleturn sensor unit for detecting shaft partial rotations, which comprises a first singleturn sensor element connected to the shaft in a rotationally fixed manner and a stationary second singleturn sensor element.

## Revendications

1. Système de détection d'angle de rotation (10) pour détecter un mouvement de rotation d'un arbre (12), avec
une unité de rotor (18) solidaire en rotation de l'arbre (12) et entourant radialement l'arbre (12), qui comprend au moins un aimant de capteur (24), une unité de stator fixe (20) avec une platine de stator (26), et
une unité de capteur multitour (30) qui est disposée sur la platine de stator (26) à une distance radiale de l'arbre (12) et qui coopère fonctionnellement avec l'aimant de capteur (24) pour détecter les rotations de l'arbre, avec un capteur de Wiegand (34),
au moins un capteur Hall (40) et
une unité d'évaluation (38) qui est reliée électriquement avec le capteur de Wiegand (34) et le capteur Hall (40),
**caractérisé en ce que**
l'unité de capteur multitour (30) comprend une platine d'unité de capteur séparée (32) qui est fixée à la platine de stator (26) et sur laquelle sont disposés le capteur de Wiegand (34), le au moins un capteur Hall (40) et l'unité d'évaluation (38), le capteur Wiegand (34) étant disposé sur un premier côté axial (A1) de la carte d'unité de capteur (32) et le capteur Hall (40) étant disposé sur un deuxième côté axial (A2) de la carte d'unité de capteur (32), opposé au premier côté axial (A1) dans le sens axial.

2. Système de détection d'angle de rotation (10) selon la revendication 1, dans lequel le capteur de Wiegand (34) et le capteur Hall (40) sont espacés latéralement l'un de l'autre sur la carte d'unité de capteur (32).

3. Système de détection d'angle de rotation (10) selon l'une quelconque des revendications précédentes, dans lequel l'unité de capteur multitour (30) comprend un circuit intégré (36) par lequel l'unité d'évaluation (38) et le capteur Hall (40) sont constitués.

4. Système de détection d'angle de rotation (10) selon la revendication 3, dans lequel le circuit intégré (36) est disposé sur la deuxième face axiale (A2) de la carte d'unité de détection (32) et la carte de stator (26) comprend, sur la face axiale opposée à l'unité de rotor (18), un évidement (42) dans lequel le circuit intégré (36) est au moins partiellement immergé.

5. Système de détection d'angle de rotation (10) selon l'une quelconque des revendications précédentes, dans lequel l'unité de rotor (18) comprend quatre aimants de détection (24) distribués uniformément sur la circonférence.

6. Système de détection d'angle de rotation (10) selon l'une quelconque des revendications précédentes, dans lequel l'arbre (12) est un arbre creux.

7. Système de détection d'angle de rotation (10) selon l'une des revendications précédentes, dans lequel il existe en plus une unité de capteur capacitif monotour pour détecter les rotations partielles de l'arbre, qui comprend un premier élément de capteur monotour solidaire en rotation de l'arbre et un deuxième élément de capteur monotour fixe.
